# EUROPEAN PATENT APPLICATION

(11) **EP 2 009 907 A1**
(43) Date of publication of application: **31.12.2008**
(21) Application number: 07741298.9
(22) Date of filing: 10.04.2007
(51) Int. Cl.: H04N 5/225, G06T 3/00, G06T 3/40, H04N 5/232, H04N 7/18

(54) **CAMERA APPARATUS, AND IMAGE PROCESSING APPARATUS AND IMAGE PROCESSING METHOD**

(30) Priority: 13.04.2006 JP 2006111189
(71) Applicant: Opt Corporation, Chino-shi, Nagano 391-0013 (JP)
(72) Inventor: OGAWA, Tatsuro, Chino-shi, Nagano 391-0013 (JP)
(74) Representative: Schäfer, Matthias W.
(86) International application number: PCT/JP2007/057862
(87) International publication number: WO 2007/119712

(57) **Abstract**

Provided is a camera apparatus capable of displaying an image where a wide range is photographed, and enlarging and displaying an image of a narrow range as needed, thereby making it easier to distinguish a content of the image. In the camera apparatus, a reduction picture in which an entirety of a picked-up image is displayed in a partial area of a display screen of the display means is generated, an enlargement picture in which a distortion due to a wide-angle photographic lens is corrected for one or a plurality of parts of the picked-up image and which is subjected to enlargement to become larger than the reduction picture is generated, and both of the reduction picture and the enlargement picture are displayed on the display screen.

## Description

### Technical Field

The present invention relates to a camera apparatus using a wide-angle photographic lens, an image processing apparatus, and an image processing method.

### Background Art

Up to now, monitoring systems have been employed by banks, convenience stores, or other such stores, as countermeasures against crimes such as burglary, theft, and sneak theft. The monitoring systems include a camera apparatus for photographing the inside of the stores. A recent increase in the crimes has started to bring about a gain in popularity of the monitoring systems even at general households. There is a demand that the camera apparatus used in such a monitoring systembe able to photograph with a wide photographic angle of view in order to photograph a monitoring range without a blind spot. As a camera apparatus having a wide photographic angle of view, a camera apparatus using an omnidirectional image-pickup lens is disclosed in, for example, Patent Document 1.

Patent Document 1: JP 2003-303335 A

### Disclosure of the Invention

### Problem to be solved by the Invention

However, an image in which a wide range is photographed raises such a problem that an image of a part thereof within a narrow range, for example, a face or clothes of a person is low in resolution, making it difficult to distinguish a content of the image.

It is therefore an object of the present invention to provide a camera apparatus, an image processing apparatus, and an image processing method, which are capable of displaying an image in which a wide range is photographed and make it easier to distinguish a content of an image by enlarging and displaying an image of a narrow range as necessary.

### Means for solving the Problem

In order to solve the above-mentioned problem, a camera apparatus according to the present invention includes: a camera section including: a wide-angle photographic lens; and image-pickup means having an image-pickup surface on which subject light transmitted through the photographic lens is imaged; image processing control means for performing an image processing on image data on a picked-up image obtained by imaging the subject light on the image-pickup means; display means including a display screen for displaying a picture of the image data subjected to the image processing by the image processing control means; and operation means for operating the display screen, in which the image processing control means performs: a reduction picture generating processing of generating a reduction picture that is obtained by displaying an entirety of the picked-up image in a partial area of the display screen; an enlargement picture generating processing of correcting a distortion due to the photographic lens for one or a plurality of parts of the picked-up image and generating an enlargement picture that is subjected to enlargement to become larger than the reduction picture; and control for displaying the reduction picture and the enlargement picture on the display screen.

By thus structuring and configuring the camera apparatus, the enlargement picture whose distortion is corrected makes it possible to watch a detailed picture within a photographed range, while the reduction picture makes it possible to watch an overall situation within the photographed range.

Further, according to another invention, in addition to the above-mentioned invention, the reduction picture is provided with a display indicating a range corresponding to the enlargement picture.

By thus structuring and configuring the camera apparatus, since the reduction picture is provided with the display indicating the range corresponding to the enlargement picture, it is possible to easily confirm a positional relationship of the enlargement picture with respect to the reduction picture.

Further, according to another invention, in addition to the above-mentioned invention, in a case where the reduction picture and the enlargement picture are displayed simultaneously on the display screen, image data on the reduction picture and image data on the enlargement picture are transferred from the image processing control means to the display means at mutually different timings.

By thus structuring and configuring the camera apparatus, transfer time for the image data can be made shorter than in a case where the image data on the reduction picture and the image data on the enlargement picture are transferred at the same timing.

Further, according to another invention, in addition to the above-mentioned invention, the reduction picture has been subjected to a processing of reducing a data amount of an image.

By thus structuring and configuring the camera apparatus, it is possible to reduce the transfer time for the image data on the reduction picture.

Further, according to another invention, in addition to the above-mentioned invention, a plurality of display means and a plurality of operation means are provided to the camera section as the display means and the operation means, respectively, and the image processing control means is provided on a side of the operation device.

By thus structuring and configuring the camera apparatus, by providing one camera section with a plurality of operation devices, it is possible to watch a picture captured by the same camera section on display screens of the plurality of operation devices. Further, by providing the image processing control means to each of the operation devices, it is possible to watch pictures obtained by subjecting the image obtained by the imaging to image processings that are different between the operation devices.

Further, according to another invention, in addition to the above-mentioned invention, the image data transferred from a side of the camera section to a side of the display means in order to generate the enlargement picture is set as image data only on a part corresponding to the enlargement picture among the image data on the picked-up image.

By thus structuring and configuring the camera apparatus, by setting the image data, which is transferred from the side of the camera section to a side of the display device in order to generate the enlargement picture, as the image data only on the part corresponding to the enlargement picture among the image data on the picked-up image, it is possible to reduce transfer time for the image data transferred from the camera section to the side of the display device. Accordingly, the display of the enlargement picture can be performed smoothly on the plurality of operation devices.

In order to solve the above-mentioned problem, an image processing apparatus according to the present invention, for performing an image processing on a picked-up image of a subject obtained by imaging light therefrom on image-pickup means by a wide-angle photographic lens, in which there are performed: a reduction picture generating processing of generating a reduction picture that is obtained by displaying an entirety of the picked-up image in a partial area of a display screen; an enlargement picture generating processing of correcting a distortion due to the photographic lens for one or a plurality of parts of the picked-up image and generating an enlargement picture that is subjected to enlargement to become larger than the reduction picture; and control for displaying the reduction picture and the enlargement picture on the display screen.

By thus structuring and configuring the image processing apparatus, the enlargement picture whose distortion is corrected makes it possible to watch a detailed picture within the photographed range, while the reduction picture makes it possible to watch an overall situation within the photographed range.

In order to solve the above-mentioned problem, an image processing method according to the present invention, in which an image processing is performed on a picked-up image of a subject obtained by imaging light therefrom on image-pickup means by a wide-angle photographic lens, includes: a reduction picture generating processing of generating a reduction picture that is obtained by displaying an entirety of the picked-up image in a partial area of a display screen; an enlargement picture generating processing of correcting a distortion due to the photographic lens for one or a plurality of parts of the picked-up image and generating an enlargement picture that is subjected to enlargement to become larger than the reduction picture; and a processing of displaying the reduction picture and the enlargement picture on the display screen.

By employing such an image processing method, the enlargement picture whose distortion is corrected makes it possible to watch a detailed picture within the photographed range, while the reduction picture makes it possible to watch an overall situation within the photographed range.

### Effects of the Invention

According to the camera apparatus, the image processing apparatus, and the image processing method according to the present invention, it is possible to display the image in which the wide range is photographed, and to enlarge and display the image of the narrow range as needed. Therefore, it is possible to watch an entirety of a photographed range and to watch the image of the narrow range as an image whose content is easy to distinguish.

### Brief Description of the Drawings

[FIG. 1] is a diagram illustrating an overall structure of a camera apparatus according to an embodiment of the present invention.
[FIG. 2] is a perspective view illustrating a structure of a camera section of the camera apparatus of FIG. 1.
[FIG. 3] is a block diagram illustrating a configuration of the camera apparatus of FIG. 1.
[FIGS. 4] are diagrams illustrating a display mode of a picture on the camera apparatus of FIG. 1.
[FIGS. 5] are diagrams illustrating another display mode of a picture on the camera apparatus of FIG. 1.
[FIGS. 6] are diagrams illustrating another display mode of a picture on the camera apparatus of FIG. 1.
[FIG. 7] is a diagram illustrating a structure of a camera apparatus according to another embodiment of the present invention.
[FIG. 8] is a block diagram illustrating a configuration of the camera apparatus of FIG. 7.

### Description of Reference Numerals

- 100 ...: camera apparatus
- 221 ...: photographic lens
- 230 ...: image-pickup element (image-pickup means)
- 240 ...: circuit device (image processing control means)
- 300 ...: monitor (display screen)
- 320 ...: enlargement picture
- 340 ...: reduction picture
- 341 ...: area display
- 343A ...: area display
- 343B ...: area display
- 344A ...: area display
- 344B ...: area display
- 344C ...: area display
- 344D ...: area display
- 350 ...: 2-way-split part picture (enlargement picture)
- 351 ...: 2-way-split part picture (enlargement picture)
- 360 ...: 4-way-split part picture (enlargement picture)
- 361 ...: 4-way-split part picture (enlargement picture)
- 362 ...: 4-way-split part picture (enlargement picture)
- 363 ...: 4-way-split part picture (enlargement picture)
- 381A ...: 2-way-split part picture (enlargement picture)
- 381B ...: 2-way-split part picture (enlargement picture)
- 391A ...: 4-way-split part picture (enlargement picture)
- 391B ...: 4-way-split part picture (enlargement picture)
- 391C ...: 4-way-split part picture (enlargement picture)
- 391D ...: 4-way-split part picture (enlargement picture)
- 400 ...: operation device (operation means)

### Best Mode for carrying out the Invention

### (First Embodiment)

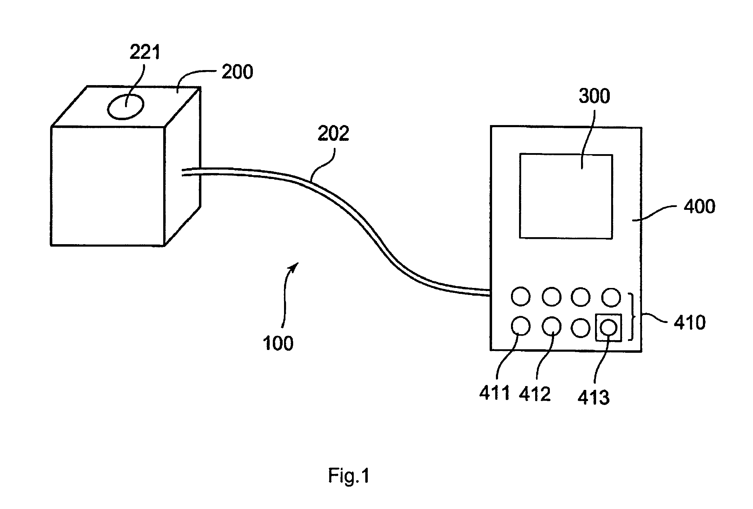

Description is made of a camera apparatus 100 according to a first embodiment of the present invention by referring to FIGS. 1 to 6. The camera apparatus 100 can be used as a monitor camera for a household or for an office, and can also be used as a camera apparatus for photographing a scene of a conference or photographing for product inspection. Note that an image processing method is described along with an operation of the camera apparatus 100.

FIG. 1 illustrates a structure of an overall external appearance of the camera apparatus 100. The camera apparatus 100 includes a camera section 200, a monitor 300 serving as display means, and an operation device 400 serving as operation means. In this embodiment, the monitor 300 is integrally mounted to the operation device 400. Displayed on the monitor 300 is an image obtained by photographing by the camera section 200. The operation device 400 is equipped with an operation switch 410 for operating the camera apparatus 100 such as for switching over a power switch of the camera apparatus 100 and display contents displayed on the monitor 300 and the like.

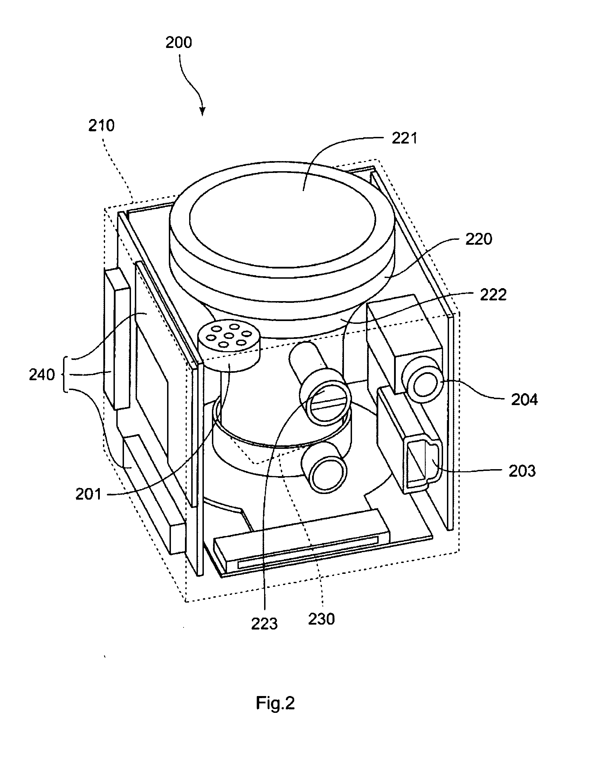

Next, FIG. 2 is referenced to describe a structure of the camera section 200. The camera section 200 includes an external casing 210 illustrated by the dotted lines of FIG. 2, an optical system 220, an image-pickup element 230 serving as image-pickup means, and a circuit device 240. The external casing 210 has a small shape exhibiting, for example, substantially a rectangular parallelepiped of 3 cm in all directions. The optical system 220 has a photographic lens 221 and a lens-barrel 222.

The optical system 220 has the lens-barrel 222 received inside the external casing 210, and has the photographic lens 221 exposed to an outside of the external casing 210. The photographic lens 221 is a so-called wide-angle lens having such an optical characteristic as a wide angle of view of 180 degrees. On a front surface being a side from which subject light is incident, the photographic lens 221 exhibits a bulge approximately the same as that of an ordinary convex lens, which is close to a flat plane. However, glass inside a lens is elaborately processed to provide an angle of view of 180 degrees, and can photograph over an entire perimeter about an optical axis, namely, a 360-degree perimeter.

An image-pickup element 230 is disposed in an imaging position of the photographic lens 221. For example, a complementary metal oxide semiconductor (CMOS) sensor is used as the image-pickup element 230. Instead of the CMOS sensor, a charge coupled device (CCD) sensor or other such photoelectric conversion element may be used.

The lens-barrel 222 is equipped with a focusing knob 223. The lens-barrel 222 is structured to move back and forth along the optical axis with respect to the image-pickup element 230 when the focusing knob 223 is held by fingers of a hand to be rotated about the optical axis. Therefore, the focusing knob 223 makes it possible to adjust a position in the optical axis of the photographic lens 221 so that the imaging position of the photographic lens 221 falls on an image-pickup surface of the image-pickup element 230.

In this embodiment, a size of the image-pickup surface of the image-pickup element 230 and a layout of the image-pickup lens 221 and the image-pickup element 230 are set in such a manner that an entirety of an image obtained by imaging light coming through the photographic lens 221 is included within the image-pickup surface of the image-pickup element 230. Therefore, on the image-pickup surface of the image-pickup element 230, a circular image is obtained by the imaging in correspondence with a shape of the photographic lens 221.

Further, the camera section 200 includes a microphone 201, a universal serial bus (USB) connection section 203 to which a USB cable 202 serving as communication means is connected, and an AV signal outputting section 204 for outputting an audio signal and a video signal. The microphone 201 captures a sound in a place within a range being photographed. The camera section 200 and the operation device 400 are communicably connected to each other via the USB cable 202 connected to the USB connection section 203. The AV signal outputting section 204 is used for outputting image data from a camera section 200 side and sound signals to the monitor and the speaker, respectively.

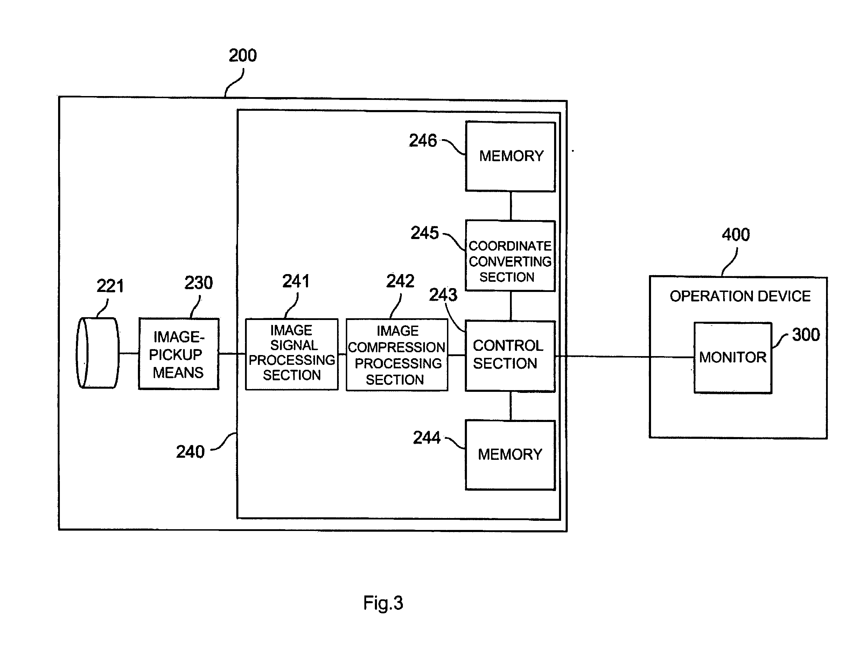

FIG. 3 illustrates, as a block diagram, a configuration of the circuit device 240 and an overall configuration of the camera apparatus 100. FIG. 3 is referenced to describe the operation of the camera apparatus 100 and the like. Further, the circuit device 240 is configured also as an image processing device.

Subject light transmitted through the photographic lens 221 is imaged on the image-pickup surface of the image-pickup element 230, and an image signal based on an image obtained by the imaging is output from the image-pickup element 230. The image signal output from the image-pickup element 230 is input to the circuit device 240. The circuit device 240 includes an image signal processing section 241, an image compression processing section 242, a control section 243, a memory 244 provided to the control section 243, a coordinate converting section 245, and a memory 246 provided to the coordinate converting section 245.

The image signal output from the image-pickup element 230 is input to the image signal processing means 241. In the image signal processing means 241, the image signal output from the image-pickup element 230 is subjected to a predetermined image processing such as a color processing.

In the image compression processing means 242, image data on the image signal that has been subjected to the image processing in the image signal processing means 241 is subjected to a compression processing to generate compressed image data in which a data amount of the image data is reduced. The compression processing for the image data is performed by using, for example, joint photographic experts group (JPEG).

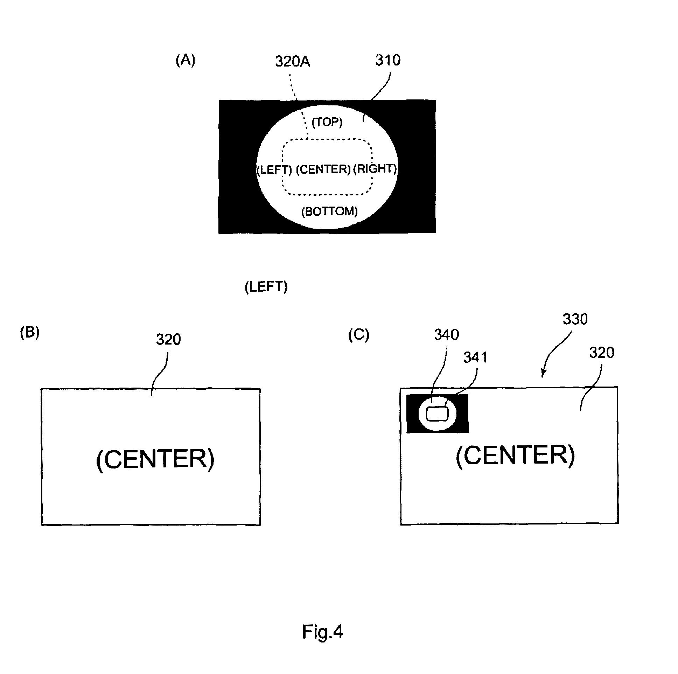

The control section 243 administers control on the operation of the camera apparatus 100, including a generation processing for a picture corresponding to a display mode of a picture which is being obtained by photographing through the photographic lens 221 and which is to be displayed on the monitor 300. As illustrated in FIGS. 4 to 6 described later, the camera apparatus 100 of this embodiment can display the picture obtained by the photographing through the photographic lens 221 on the monitor 300 by selecting the display mode from a plurality of display modes different in content of the picture. The control section 243 performs the image processing for generating a picture to be displayed in each display mode from the image data on the image obtained by the photographing. The control section 243 is configured by, for example, a central processing unit (CPU).

The memory 244 not only contains a program for operating each section of the camera apparatus 100 but is also provided with a work memory for executing the program. For example, the image signal processing section 241 and image compression processing section 242 make use of the memory 244 for their processings.

The coordinate converting section 245 performs the image processing for generating a picture corresponding to each display mode based on the image data obtained from the image compression processing section 242 together with the control section 243. The coordinate converting section 245 has a function of converting a coordinate position of an image picked up on the image-pickup surface of the image-pickup element 230 into a coordinate position of a picture on the monitor 300 when the image picked up on the image-pickup surface of the image-pickup element 230 is to be subjected to the image processing so as to become a picture displayed in each display mode and is to be displayed on the monitor 300. The memory 246 is a work memory used for performing the image processing by using the coordinate converting section 245.

The monitor 300 displays a picture based on the image signal output from the circuit device 240. The monitor 300 is configured by, for example, a liquid display device, a CRT display device, or a plasma display device.

The operation device 400 is equipped with the operation switch 410 for operating the camera apparatus 100 such as for switching over the power switch of the camera apparatus 100 and the display contents displayed on the monitor 300 and the like (referred to FIG. 1). Based on a content of an operation performed on the operation switch 410, the camera apparatus 100 is operated via the control section 243. An instruction of the operation switch 410 is transmitted to the control section 243, and a predetermined operation is executed. Note that the operation switch 410 is used for performing, for example, specification of a position for an area display described later.

The operation switch 410 includes amain selection button 411 and a sub-selection button 412 that are used for switching over the display modes of the picture obtained through the photographic lens 221 and displayed on the monitor 300. Hereinafter, description is made of: the display modes of the picture on the monitor 300 which are switched over by depressing the main selection button 411 and the sub-selection button 412; and the content of the displayed picture.

The initial display mode, in which the picture obtained by the photographing through the photographic lens 221 is displayed after power to the camera apparatus 100 is turned on from a power-off state, is set to an entirety display mode for displaying an entirety picture 310 illustrated in FIG. 4 (A). In this embodiment, the following description is made on the assumption that the camera section 200 is set, for example, on a wall surface of a room, and in the entirety picture 310 illustrated in FIG. 4 (A), a top-to-bottom direction of the page corresponds to a top-to-bottom direction, respectively, of a subject, while a left-to-right direction of the page corresponds to a left-to-right direction of the subject. In addition, in the figures illustrating contents of the pictures described below, top, bottom, left, and right directions of the subject which are taken as the pictures are indicated by (TOP), (BOTTOM), (LEFT), and (RIGHT), respectively. (CENTER) indicates the center of the top, bottom, left, and right directions, namely, indicates a position on the optical axis.

In the entirety picture 310, the image obtained by the imaging through the photographic lens 221 on the image-pickup surface of the image-pickup element 230 is displayed as it is. As described above, the image obtained by the imaging through the photographic lens 221 has such a size as to be included within the image-pickup surface of the image-pickup element 230. Therefore, the image obtained by the imaging through the photographic lens 221 on the image-pickup surface of the image-pickup element 230 has a circular outline, while a part of the image-pickup surface other than a part on which the light is imaged becomes a dark part exposed to a small quantity of light. In this embodiment, the part of the image-pickup surface other than the part on which the image is obtained by the imaging through the photographic lens 221 is handled as having pixel data with a brightness of 0. Therefore, in the entirety picture 310, a picture of the image obtained by the imaging through the photographic lens 221 is displayed in a circular shape, while the other part is displayed in black. Note that the entirety picture 310 is a picture obtained by photographing with an angle of view of 180 degrees through the photographic lens 221, and is therefore a picture in which a so-called distortion aberration becomes higher in a position farther from the center and closer to the perimeter.

By depressing the main selection button 411, the display of the monitor 300 can be switched from the entirety display mode for displaying the entirety picture 310 illustrated in FIG. 4 (A) to an enlargement display mode for displaying an enlargement picture 320 illustrated in FIG. 4 (B) and to a combination display mode I for displaying a combination picture 330 illustrated in FIG. 4 (C). The display modes are switched over each time the main selection button 411 is depressed in such an order as the entirety display mode (FIG. 4 (A)) -> the enlargement display mode (FIG. 4 (B)) -> the combination display mode I (FIG. 4 (C)) -> the entirety display mode (FIG. 4 (A)).... In other words, by depressing the main selection button 411, it is possible to select the three display modes, namely, the entirety display mode (FIG. 4 (A)), the enlargement display mode (FIG. 4 (B)), and the combination display mode I (FIG. 4 (C)).

The enlargement picture 320 in the enlargement display mode illustrated in FIG. 4 (B) is an enlargement picture obtained by subjecting a picture of an area 320A of substantially a rectangle which is indicated by the dotted line in a central part of the entirety picture 310 illustrated in FIG. 4 (A) to a correction processing of correcting the distortion aberration due to the photographic lens 221 and to an enlargement processing so as to be displayed in full on a display screen of the monitor 300. The area 320A is set so as to include a picture of a given subject within such a range that, for example, about the optical axis of the photographic lens 221, the angle of view in the top-to-bottom direction is 90 degrees while the angle of view in the left-to-right direction is 120 degrees.

In other words, the picture of the enlargement picture 320 is a panoramic picture that extends along the left-to-right direction with the angle of view of 90 degrees in the top-to-bottom direction and the angle of view of 120 degrees in the left-to-right direction about the optical axis of the photographic lens 221.

The enlargement picture 320 is generated based on the image data on the picked-up image corresponding to the area 320A part. In other words, the enlargement picture 320 is generated by performing an image processing such as the interpolation processing for pixel data on the image data on the part corresponding to the area 320A among the image data obtained by the image-pickup element 230 and output from the image compression processing section 242. By such an image processing described above, the enlargement picture 320 is generated as a picture obtained by subjecting the picked-up image of the part corresponding to the area 320A to the interpolation processing for a distortion aberration and the enlargement processing. Note that the enlargement picture 32 0 is generated based on the image data obtained by the image-pickup element 230, and hence the picture displayed on the monitor 300 exhibits less deterioration than in a case where the enlargement picture 320 is generated from the picture data on the entirety picture 310.

The combination picture 330 in the combination display mode I illustrated in FIG. 4 (C) is a picture in which a reduction picture 340 obtained by reducing the entirety picture 310 is displayed on top left of the display screen of the monitor 300 in addition to the enlargement picture 320 illustrated in FIG. 4 (B). The reduction picture 340 is generated by performing a thinning processing for pixel data or the like on the image data obtained by the image-pickup element 230 and output from the image compression processing section 242. The reduction picture 340 is generated by the thinning processing for pixel data, and hence an amount of the image data becomes smaller than a data amount of the entirety picture 310. This results in an increase in processing speed of each of processings performed on the reduction picture 340, such as transfer of image data on the reduction picture 340. In addition to the above-mentioned thinning processing for pixel data, a method of reducing the image data on the reduction picture 340 may be performed by reducing image data on color information or the like. Further, when photographing is performed on the reduction picture 340, the image data may be reduced by lowering a frame rate for the photographing.

By displaying the enlargement picture 320 and the reduction picture 340 together on one screen, the reduction picture 340 makes it possible to watch an overall situation within a range photographed by the photographic lens 221, while the picture obtained by enlargement makes it possible to watch a detailed situation of the central part within the photographed range. Further, an area display 341 is overlaid on the reduction picture 340 to be displayed for a display indicating a range corresponding to the area 320A. The area display 341 being displayed makes it possible to know a positional relationship of the enlargement picture 320 with respect to the reduction picture 340.

In each of the display modes, namely, the entirety display mode (FIG. 4 (A)), the enlargement display mode (FIG. 4 (B)), and the combination display mode I (FIG. 4 (C)), further selection can be made by depressing the sub-selection button 412 from among a plurality of displaymodes for each of the display modes as described below.

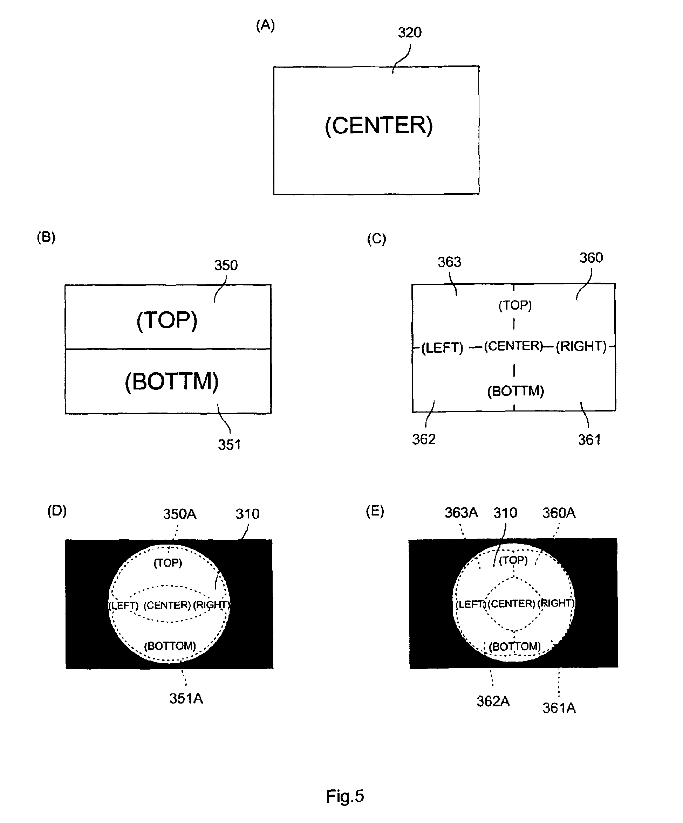

When the display mode of the monitor 300 is the entirety display mode (FIG. 4 (A)), by depressing the sub-selection button 412 once, the display mode of the monitor 300 can be switched to the enlargement display mode for displaying the enlargement picture 320 illustrated in FIG. 5 (A). The enlargement picture 320 illustrated in FIG. 5 (A) is the same picture as the enlargement picture 320 illustrated in FIG. 4 (B). In other words, when the sub-selection button 412 is depressed once in the entirety display mode (FIG. 4 (A)), the same enlargement picture 320 as that obtained when the main selection button 411 is depressed is displayed.

Then, when the sub-selection button 412 is again depressed, the display mode of the monitor 300 can be switched to a 2-way split display mode in which, as illustrated in FIG. 5 (B), two pictures, namely, 2-way-split part pictures 350 and 351 are displayed on top and bottom of the display screen of the monitor 300, respectively.

The 2-way-split part pictures 350 and 351 are pictures corresponding to areas 350A and 351A, respectively, each exhibiting substantially a fan shape of an arch shape indicated by the dotted line in the entirety picture 310 illustrated in FIG. 5 (D). The 2-way-split part picture 350 corresponds to a picture of the area 350A, while the 2-way-split part picture 351 corresponds to a picture of the area 351A.

The areas 350A and 351A are set symmetrically on top and bottom positions with respect to the center of the entirety picture 310, and each area is set so as to include a picture of a given subject within such a range that, for example, the angle of view in the perimeter-to-center direction perpendicular to the optical axis of the photographic lens 221 is 60 degrees while the angle of view in the circumferential direction about the optical axis is 110 degrees. In other words, the pictures of the 2-way-split part pictures 350 and 351 are panoramic pictures that extend along the left-to-right direction with the angle of view of 60 degrees in the perimeter-to-center direction perpendicular to the optical axis of the photographic lens 221 and the angle of view of 110 degrees in the left-to-right direction in the top and the bottom positions that are symmetrical with respect to the optical axis of the photographic lens 221.

The 2-way-split part pictures 350 and 351 are enlargement pictures that are obtained by subjecting the pictures of the areas 350A and 351A to the correction processing of correcting the distortion aberration due to the photographic lens 221 and to the enlargement processing so as to be displayed in full on top and bottom of the display screen of the monitor 300, respectively. In the same manner as the above-mentioned enlargement picture 320, by performing the interpolation processing for pixel data or other such processing on the image data of the image-pickup element 230 output from the image compression processing section 242, the 2-way-split part pictures 350 and 351 are also generated as pictures obtained by subjecting the picked-up images of the parts corresponding to the areas 350A and 351A, respectively, to the interpolation processing for a distortion aberration and the enlargement processing. Therefore, the picture displayed on the monitor 300 exhibits less deterioration than in a case where the 2-way-split part pictures 350 and 351 are generated from the picture data on the entirety picture 310.

Further, when the sub-selection button 412 is again depressed, the display mode of the monitor 300 can be switched to a 4-way split display mode in which, as illustrated in FIG. 5 (C), four pictures, namely, 4-way-split part pictures 360, 361, 362, and 363 are displayed on top, bottom, left, and right of the display screen of the monitor 300, respectively. The 4-way-split part pictures 360, 361, 362, and 363 are pictures corresponding to areas 360A, 361A, 362A, and 363A, respectively, each exhibiting substantially a fan shape of an arch shape indicated by the dotted line, in the entirety picture 310 illustrated in FIG. 5 (E).

The 4-way-split part picture 360 corresponds to the area 360A, the 4-way-split part picture 361 corresponds to the area 361A, the 4-way-split part picture 362 corresponds to the area 362A, and the 4-way-split part picture 363 corresponds to the area 363A. The areas 360A, 361A, 362A, and 363A are areas set in 45-degree upper directions and 45-degree lower directions on left and right of the entirety picture 310 symmetrically with respect to the center thereof, and each area is set so as to include a picture of a given subject within such a range that, for example, the angle of view in a perimeter-to-center direction perpendicular to the optical axis of the photographic lens 221 is 50 degrees while the angle of view in a circumferential direction about the optical axis is 90 degrees.

In other words, the pictures of the 4-way-split part pictures 360, 361, 362, and 363 are panoramic pictures with the angle of view of 50 degrees in the perimeter-to-center direction perpendicular to the optical axis of the photographic lens 221 and the angle of view of 60 degrees in the left-to-right direction in positions toward the 45-degree upper directions and 45-degree lower directions on left and right of the photographic lens 221.

The 4-way-split part pictures 360, 361, 362, and 363 are enlargement pictures obtained by subjecting the pictures of the areas 360A, 361A, 362A, and 363A to the correction processing of correcting the distortion aberration due to the photographic lens 221 and to the enlargement processing so as to be displayed in full on top and bottom of the display screen of the monitor 300, respectively. In the same manner as the above-mentioned enlargement picture 320 or the 2-way-split part pictures 350 and 351, by performing the interpolation processing for pixel data or other such processing on the image data of the image-pickup element 230 output from the image compression processing section 242, the 4-way-split part pictures360, 361, 362, and 363 are also generated as pictures obtained by subjecting the picked-up images of the parts corresponding to the areas 360A, 361A, 362A, and 363A, respectively, to the interpolation processing for a distortion aberration and the enlargement processing. Therefore, the picture displayed on the monitor 300 exhibits less deterioration than in a case where the 4-way-split part pictures 360, 361, 362, and 363 are generated from the picture data on the entirety picture 310.

Following the display mode of the 4-way split display mode, when the sub-selection button 412 is further again depressed, the display of the monitor 300 returns to the enlargement entirety display mode (FIG. 5 (A)). As described above, when the display mode of the monitor 300 is the entirety display mode (FIG. 4 (A)), the display modes of the monitor 300 are switched over each time the sub-selection button 412 is depressed in such an order as the enlargement display mode (FIG. 5 (A)) -> the 2-way split display mode (FIG. 5 (B)) -> the 4-way split display mode I (FIG. 5 (C)) -> the entirety display mode (FIG. 5 (A))....

When the display mode of the monitor 300 is the enlargement display mode (FIG. 4 (B)), by depressing the sub-selection button 412, the display mode of the monitor 300 can be switched to the 2-way split display mode illustrated in FIG. 5 (B). Further, by depressing the sub-selection button 412 again, the display mode of the monitor 300 can be switched to the 4-way split display mode illustrated in FIG. 5 (C). Following this display mode, when the sub-selection button 412 is further again depressed, the display mode of the monitor 300 becomes the entirety display mode illustrated in FIG. 5 (A) for displaying the same picture as the enlargement picture 320 illustrated in FIG. 4 (B).

In other words, when the display mode of the monitor 300 is the enlargement display mode (FIG. 4 (B)), the display modes of the monitor 300 can be switched over each time the sub-selection button 412 is depressed in such an order as the 2-way split display mode (FIG. 5 (B)) -> the 4-way split display mode (FIG. 5 (C)) -> the entirety display mode (FIG. 5 (A))....

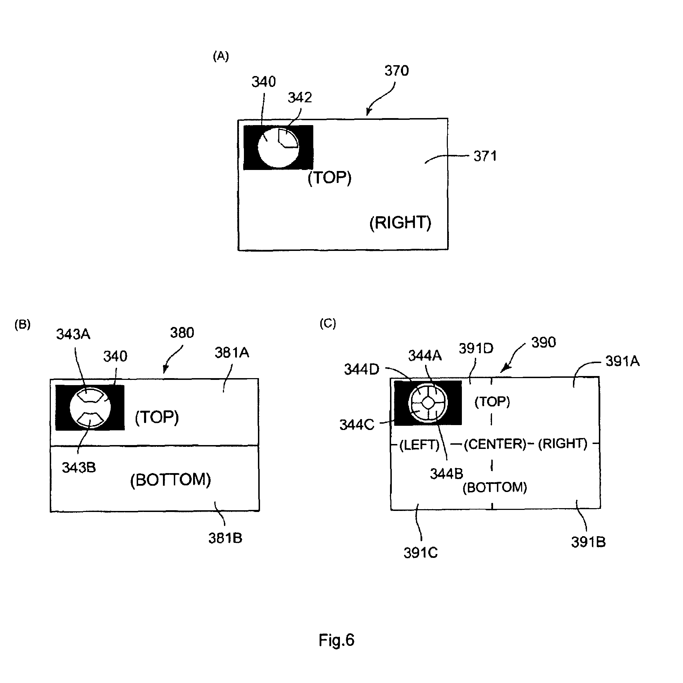

When the display mode of the monitor 300 is the combination display mode I (FIG. 4 (C)) in which the combination picture 330 is displayed, by depressing the sub-selection button 412 once, the display modes of the monitor 300 can be switched over to a combination display mode II for displaying a combination picture 370 illustrated in FIG. 6(A). The combination picture 370 is a picture in which the reduction picture 340 and an enlargement picture 371 are displayed together.

The enlargement picture 371 is a picture corresponding to an area specified by an area display 342 which is displayed by being overlaid on the reduction picture 340 and exhibits substantially a fan shape of an arch shape.

In the reduction picture 340, the area display 342 is set so as to include a picture of a given subject within such a range that, for example, the angle of view in the perimeter-to-center direction perpendicular to the optical axis of the photographic lens 221 is 50 degrees while the angle of view in the circumferential direction about the optical axis is 90 degrees. In other words, the picture of the enlargement picture 371 is a panoramic picture with the angle of view of 50 degrees in the perimeter-to-center direction perpendicular to the optical axis of the photographic lens 221 and the angle of view of 90 degrees in the left-to-right direction.

By a rotation operation of a ball-type switch 413, the area display 342 can be moved to an arbitrary position in a circumferential direction of the reduction picture 340. The enlargement picture 371 is an enlargement picture obtained by subjecting a picture of an area specified by the area display 342 moved to a desired position by the operation of the ball-type switch 413 to the correction processing of correcting the distortion aberration due to the photographic lens 221 and to the enlargement processing so as to be displayed in full on the display screen of the monitor 300.

In the same manner as the above-mentioned enlargement picture 320, by performing the interpolation processing for pixel data or other such processing on the image data of the image-pickup element 230 output from the image compression processing section 242, the enlargement picture 371 is generated as a picture obtained by subjecting the picked-up images of the part corresponding to the area display 342 to the interpolation processing for a distortion aberration and the enlargement processing. Therefore, the picture displayed on the monitor 300 exhibits less deterioration than in a case where the enlargement picture 371 is generated from the picture data on the reduction picture 340 generated by the thinning processing for pixel data.

The reduction picture 340 is displayed on top left of the display screen of the monitor 300. By displaying the enlargement picture 371 and the reduction picture 340 together on one screen, the reduction picture 340 makes it possible to watch an overall situation within a range photographed by the photographic lens 221, while the picture obtained by enlargement makes it possible to watch a detailed situation of the photographed range of the area display 342. Further, the area display 342 being displayed makes it possible to know a positional relationship of the enlargement picture 371 with respect to the reduction picture 340.

When the display mode of the monitor 300 is the above-mentioned combination display mode II (FIG. 6(A)), by depressing the sub-selection button 412 once, the display modes of the monitor 300 can be switched over to a combination display mode III for displaying a combination picture 380 illustrated in FIG. 6(B). The combination picture 380 is a picture in which two pictures, namely, 2-way-split part pictures 381A and 381B are displayed in addition to the reduction picture 340.

The 2-way-split part pictures 381A and 381B are pictures corresponding to areas specified by two area displays 343A and 343B which are displayed by being overlaid on the reduction picture 340 and each exhibit substantially a fan shape of an arch shape. The 2-way-split part picture 381A corresponds to the area display 343A, while the 2-way-split part picture 381B corresponds to the area display 343B.

In the reduction picture 340, the area displays 343A and 343B are set symmetrically on both sides of the optical axis of the photographic lens 221 so as to each include a picture of a given subject within such a range that, for example, the angle of view in the perimeter-to-center direction perpendicular to the optical axis of the photographic lens 221 is 60 degrees while the angle of view in the circumferential direction about the optical axis is 110 degrees. In other words, the pictures of the 2-way-split part pictures 381A and 381B are panoramic pictures that extend along the left-to-right direction with the angle of view of 60 degrees in the perimeter-to-center direction perpendicular to the optical axis of the photographic lens 221 and the angle of view of 110 degrees in the left-to-right direction in positions that are symmetrical with respect to the optical axis of the photographic lens 221.

By the rotation operation of the ball-type switch 413, the area displays 343A and 343B are set to be able to move to arbitrary positions in the circumferential direction of the reduction picture 340. The 2-way-split part pictures 381A and 381B are enlargement pictures that are obtained by subjecting pictures of areas specified by the area displays 343A and 343B, respectively, moved to desired positions by the operation of the ball-type switch 413 to the correction processing of correcting the distortion aberration due to the photographic lens 221 and to the enlargement processing so as to be displayed in full on top and bottom of the display screen of the monitor 300, respectively.

In the same manner as the above-mentioned 2-way-split part pictures 350 and 351, by performing the interpolation processing for pixel data or other such processing on image data of the image-pickup element 230 output from the image compression processing section 242, the 2-way-split part pictures 381A and 381B are generated as pictures obtained by subj ecting the picked-up images of the parts corresponding to the area displays 343A and 343B, respectively, to the interpolation processing for a distortion aberration and the enlargement processing. Therefore, the picture displayed on the monitor 300 exhibits less deterioration than in a case where the 2-way-split part pictures 381A and 381B are generated from the picture data on the reduction picture 340 generated by the thinning processing for pixel data.

The reduction picture 340 is displayed on top left of the display screen of the monitor 300. By displaying the 2-way-split part pictures 381A and 381B and the reduction picture 340 together on one screen, the reduction picture 340 makes it possible to watch an overall situation within a range photographed by the photographic lens 221, while the picture obtained by enlargement makes it possible to watch a detailed situation of the photographed range of the area displays 343A and 343B. Further, the area displays 343A and 343B being displayed makes it possible to know a positional relationship of the 2-way-split part pictures 381A and 381B with respect to the reduction picture 340.

When the display mode of the monitor 300 is the above-mentioned combination display mode III (FIG. 6(B)), by depressing the sub-selection button 412 once, the display modes of the monitor 300 can be switched over to a combination display mode IV for displaying a combination picture 390 illustrated in FIG. 6(C).

The combination picture 390 is a picture in which four pictures, namely, 4-way-split part pictures 391A, 391B, 391C, and 391D are displayed in addition to the reduction picture 340. The 4-way-split part pictures 391A, 391B, 391C, and 391D are pictures corresponding to areas specified by four area displays 344A, 344B, 344C, and 344D which are displayed by being overlaid on the reduction picture 340 and each exhibit substantially a fan shape of an arch shape.

The 4-way-split part picture 391A corresponds to the area display 344A, the 4-way-split part picture 391B corresponds to the area display 344B, the 4-way-split part picture 391C corresponds to the area display 344C, and the 4-way-split part picture 391D corresponds to the area display 344D. In the reduction picture 340, the area displays 344A, 344B, 344C, and344Dare set symmetrically at 45-degree intervals about the optical axis of the photographic lens 221 so as to each include a picture of a given subject within such a range that, for example, the angle of view in the perimeter-to-center direction perpendicular to the optical axis of the photographic lens 221 is 50 degrees while the angle of view in the circumferential direction about the optical axis is 90 degrees.

In other words, the pictures of the 4-way-split part pictures 391A, 391B, 391C, and 391D are panoramic pictures that extend symmetrically about the optical axis of the photographic lens 221 with the angle of view of 50 degrees in the perimeter-to-center direction perpendicular to the optical axis of the photographic lens 221 and the angle of view of 90 degrees in the left-to-right direction. By the rotation operation of the ball-type switch 413, the area displays 344A, 344B, 344C, and 344D are set to be able to move to arbitrary positions in the circumferential direction of the reduction picture 340. The 4-way-split part pictures 391A, 391B, 391C, and 391D are enlargement pictures that are obtained by subjecting the pictures of areas specified by the area displays 344A, 344B, 344C, and 344D, respectively, moved to desired positions by the operation of the ball-type switch 413, to the correction processing of correcting the distortion aberration due to the photographic lens 221 and to the enlargement processing so as to be displayed in full on the respective display screens on top, bottom, left, and right of the monitor 300.

In the same manner as the above-mentioned 4-way-split part pictures 360, 361, 362, and 363, by performing the interpolation processing for pixel data or other such processing on the image data of the image-pickup element 230 output from the image compression processing section 242, the 4-way-split part pictures 391A, 391B, 391C, and 391D are generated as pictures obtained by subjecting the picked-up images of the parts corresponding to the area displays 344A, 344B, 344C, and 344D, respectively, to the interpolation processing for a distortion aberration and the enlargement processing. Therefore, the picture displayed on the monitor 300 exhibits less deterioration than in a case where the 4-way-split part pictures 391A, 391B, 391C, and 391D are generated from the picture data on the reduction picture 340 generated by the thinning processing for pixel data.

The reduction picture 340 is displayed on top left of the display screen of the monitor 300. By displaying the 4-way-split part pictures 391A, 391B, 391C, and 391D and the reduction picture 340 together on one screen, the reduction picture 340 makes it possible to watch an overall situation within a range photographed by the photographic lens 221, while the pictures obtained by enlargement make it possible to watch detailed situations of the photographed ranges of the area displays 344A, 344B, 344C, and 344D. Further, the area displays 344A, 344B, 344C, and 344D being displayed make it possible to know positional relationships of the 2-way-split part pictures 381A and 381B with respect to the reduction picture 340.

As described above, when the display mode of the monitor 300 is the combination display mode I (FIG. 4 (C)), the display modes of the monitor 300 can be switched over each time the sub-selection button 412 is depressed in such an order as the combination display mode II (FIG. 6(A)) -> the combination display mode III (FIG. 6(B)) -> the combination display mode IV (FIG. 6(C))....

Incidentally, when the combination picture 330 (FIG. 4 (C)), the combination picture 370 (FIG. 6(A)), the combination picture 380 (FIG. 6 (B)), and the combination picture 390 (FIG. 6(C)) are to be displayed on the monitor 300, the transfer of the image data from the circuit device 240 to the monitor 300 is performed by transferring the image data on the reduction picture 340 and image data on other pictures (enlargement picture 320, enlargement picture 371, 2-way-split part pictures 381A and 381B, and 4-way-split part pictures 391A, 391B, 391C, and 391D; hereinafter, those pictures are referred to generically as "other pictures") at different timings. This configuration allows transfer time for the image data to be made shorter than in a case where the image data on the reduction picture 340 and the image data on the other pictures are transferred at the same timing.

For example, the above-mentioned other pictures focus on pictures of parts of the reduction picture 340 that displays the entirety of the photographed range, and hence it may be desired to watch changes made within the photographed range in which the other pictures are photographed in real time or consecutively at short time intervals. In such a case, the image data on the other pictures has all frames thereof transferred in real time, while the image data on the reduction picture is transferred at given intervals, for example, every 10 frames.

In contrast, in a case where more changes made in the entirety of the photographed range are focused on than the other pictures on the parts within the photographed range, the image data on the reduction picture 340 may have all frames thereof transferred in real time, while the image data on the other pictures may be transferred at given intervals, for example, every 10 frames.

Further, the image data on the reduction picture 340 and the image data on the other pictures maybe transferred alternately at a predetermined ratio, for example, a ratio of the transfer time of 1 for the image data on the reduction picture 340 to the transfer time of 4 for the image data on the other pictures.

As the operation device 400, a personal computer may be used. In this case, the monitor 300 corresponds to a monitor of the personal computer, and the operation switch 410 corresponds to a keyboard or a mouse of the personal computer. In this case, each of the main selection button 411 and the sub-selection button 412 corresponds to a predetermined key of the keyboard. Further, the area display 342, the area displays 343A and 343B, and the area displays 344A, 344B, 344C, and 344D are moved by using the mouse instead of the ball-type switch 413.

### (Second Embodiment)

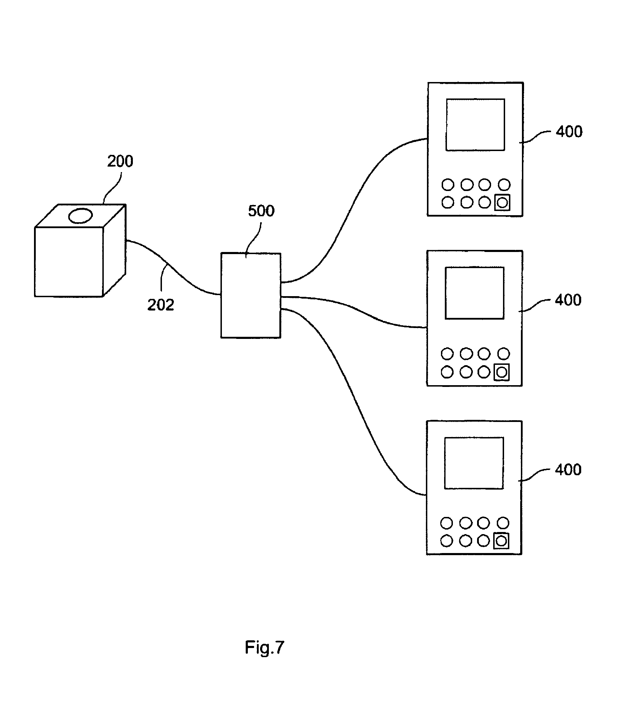

Next, description is made of a second embodiment of the present invention. In this embodiment, as illustrated in FIG. 7, the camera section 200 is connected to a server 500 via the USB cable 202, and a plurality of operation devices 400 (personal computers) are connected to the server 500. In other words, the camera apparatus 100 of this embodiment has a structure in which the plurality of operation devices 400 (personal computers) are connected to the camera section 200. According to such a structure, a picture from the camera section 200 can be watched through the plurality of operation devices 400 (personal computers).

Note that the camera apparatus 100 may have a structure in which a plurality of the USB connection sections 203 (refer to FIG. 2) are provided on the camera section 200 side, and the plurality of operation devices 400 (personal computers) are directly connected to the camera section 200 without the server 500 provided therebetween. Further, the connection between the camera section 200 and the server 500 or the connection between the camera section 200 and the operation device 400 is not limited to the USB connection, and may be a connection using other connection means such as wireless means.

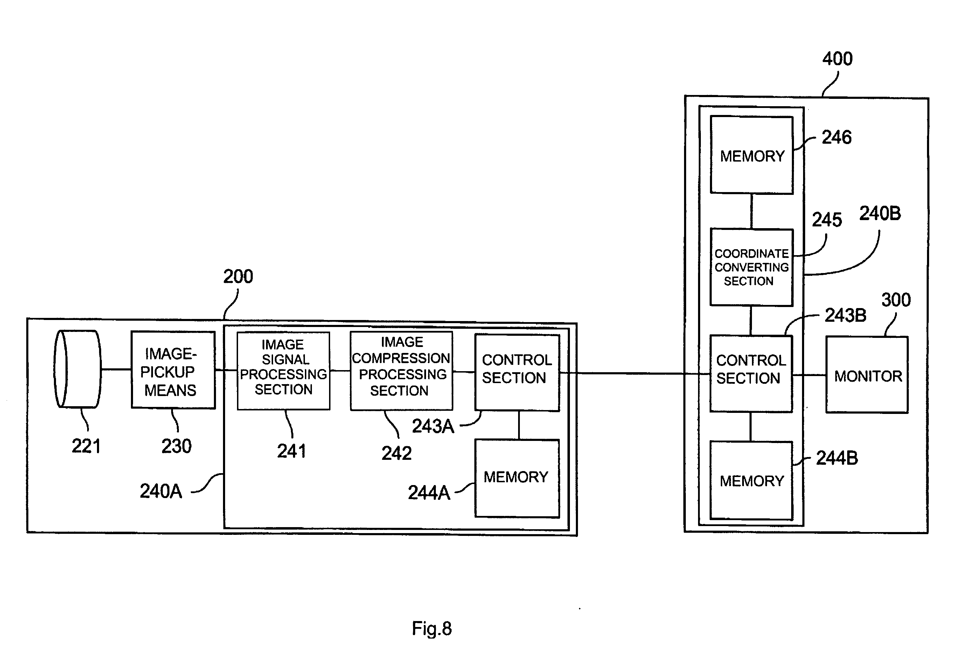

In the case where the plurality of operation devices 400 (personal computers) are thus connected to a single camera section 200, as illustrated in FIG. 8, the configuration of the circuit device 240 may be divided into a circuit device 240A provided on the camera section 200 side and a circuit device 240B provided on an operation device 400 (personal computer) side. That is, the circuit device 240A provided on the camera section 200 side is configured to include the image signal processing section 241, the image compression processing section 242, a control section 243A, and the memory 244A. Meanwhile, the circuit device 240B provided on the operation device 400 (personal computer) side is configured to include a control section 243B, a memory 244B, the coordinate converting section 245, and the memory 246. The coordinate converting section 245 and the memory 246 have the same functions as those described above with reference to Fig. 3. Further, the control sections 243A and 243B and the memories 244A and 244B have, as a whole, the same functions as the control section 243 and the memory 244, respectively, described with reference to FIG. 3. However, the processing of generating the picture corresponding to each display mode is mainly performed by the control section 243B, the memory 244B, the coordinate converting section 245, and the memory 246 that are provided to the operation device 400 (personal computer).

With such a configuration, on the operation devices 400 (personal computers), the enlargement picture 320 and the like (enlargement picture 320, 2-way-split part pictures 350 and 351, 4-way-split part pictures 360, 361, 362, and 363, 2-way-split part pictures 381A and 381B, and 4-way-split part pictures 391A, 391B, 391C, and 391D; hereinafter, those pictures are referred to generically as "enlargement picture 320 and the like") can be generated from the image data of the image-pickup element 230 output from the image compression processing section 242.

That is, in a case where the camera section 200 is configured to generate various kinds of the enlargement picture 320 and the like based on instructions from the plurality of operation devices 400 (personal computers), the camera section 200 generates various kinds of the enlargement picture 320 and the like. Therefore, the camera section 200 executes an enormous amount of processing works, taking much processing time, which raises a problem that it requires more time to display pictures on the operation devices 400 (personal computers) or other such problem. In contrast, with the configuration in which the control section 243B, the memory 244B, the coordinate converting section 245, and the memory 246 are provided to the operation device 400 (personal computer) side, it is possible to quickly display the enlargement picture 320 and the like that are independently different on each of the operation devices 400 (personal computers).

It is preferable that the image data transferred from the camera section 200 to the operation devices 400 (personal computers) be image data only on the part corresponding to the area display specified by the operation switch 410 among the image data of the image-pickup element 230. This configuration allows the transfer time for the image data to be made shorter than in a case where all the image data on the images picked up by the image-pickup element 230 are transferred from the camera section 200 to the operation devices 400. Therefore, on the monitor 300 of each of the operation devices 400 (personal computers), in the case of displaying the enlargement picture, the display can be performed smoothly. Note that in the same manner as in the first embodiment, the reduction picture 340 and the image data on the specified area display may be transferred at different timings.

Further, the image data on the area display may be image data on the part accurately corresponding to the area display, but there is a case where image data on pixels surrounding the part corresponding to the area display is necessary when the enlargement picture 320 and the like are generated. In such a case, as appropriate, the image data on the pixels surrounding the area may also be transferred.

Note that, in the camera apparatus 100 illustrated in the first embodiment or the second embodiment, the transfer of image data may be performed when the subject makes a move. For example, an infrared sensor is provided, and, when a person enters the photographed range, the transfer of the image data may be performed in response to a detection signal from the infrared sensor. As to contents displayed by the monitor 300 in this case, it is preferable to display the reduction picture 340 and the other pictures (enlargement picture 320, enlargement picture 371, 2-way-split part pictures 381A and 381B, and 4-way-split part pictures 391A, 391B, 391C, and 391D) including a moving object (such as a person).

Further, the description of the first embodiment or the second embodiment has been made by taking the camera apparatus 100 as an example, but the image data picked up by the image-pickup means such as a camera may be recorded on recording means such as a hard disk or a digital versatile disc (DVD), and subjected to the image processing by the circuit device 240 serving as the image processing device so as to be displayed on the monitor 300. In this case, the image processing device (circuit device 240) and the recording means recorded with the image data may be connected to each other via a network.

Further, the image data picked up by the image-pickup means and recorded on the above-mentioned recording means may be subjected to the image processing using the image processing method described above with regard to the circuit device 240 so as to display the picture on the monitor 300.

In other words, the image data picked up by the image-pickup means and recorded on the above-mentioned recording means may be subj ected to the reduction picture generating processing of generating the reduction picture 340 and the enlargement picture generating processing of correcting a distortion due to the photographic lens 221 for one or a plurality of parts of the picked-up image and generating the other pictures (enlargement picture 320, enlargement picture 371, 2-way-split part pictures 381A and 381B, and 4-way-split part pictures 391A, 391B, 391C, and 391D) that are subjected to enlargement to become larger than the reduction picture 340, and may be subjected to the image processing of performing the processing of displaying the reduction picture 340 and the above-mentioned other pictures on the monitor 300.
FIG. 3
   - 230: IMAGE-PICKUP MEANS
   - 241: IMAGE SIGNAL PROCESSING SECTION
   - 242: IMAGE COMPRESSION PROCESSING SECTION
   - 243: CONTROL SECTION
   - 244, 246: MEMORY
   - 245: COORDINATE CONVERTING SECTION
   - 300: MONITOR
   - 400: OPERATION DEVICE
FIG. 4 (A)
   (1) CENTER
   (2) TOP
   (3) LEFT
   (4) RIGHT
   (5) BOTTOM
FIG. 4 (B)
   (1) CENTER
FIG. 4 (C)
   (1) CENTER
FIG. 5 (A)
   (1) CENTER
FIG. 5 (B)
   (1) TOP
   (2) BOTTOM
FIG. 5 (C)
   (1) CENTER
   (2) TOP
   (3) LEFT
   (4) RIGHT
   (5) BOTTOM
FIG. 5 (D)
   (1) CENTER
   (2) TOP
   (3) LEFT
   (4) RIGHT
   (5) BOTTOM
FIG. 5 (E)
   (1) CENTER
   (2) TOP
   (3) LEFT
   (4) RIGHT
   (5) BOTTOM
FIG. 6 (A)
   (1) TOP
   (2) RIGHT
FIG. 6 (B)
   (1) TOP
   (2) BOTTOM
FIG. 6 (C)
   (1) CENTER
   (2) TOP
   (3) LEFT
   (4) RIGHT
   (5) BOTTOM
FIG. 8
   - 230: IMAGE-PICKUP MEANS
   - 241: IMAGE SIGNAL PROCESSING SECTION
   - 242: IMAGE COMPRESSION PROCESSING SECTION
   - 243A, 243B: CONTROL SECTION
   - 244A, 244B, 246: MEMORY
   - 245: COORDINATE CONVERTING SECTION
   - 300: MONITOR

## Claims

1. A camera apparatus, comprising:
a camera section including: a wide-angle photographic lens; and image-pickup means on which subject light transmitted through the photographic lens is imaged;
image processing control means for performing an image processing on image data on a picked-up image obtained by imaging the subject light on the image-pickup means;
display means including a display screen for displaying a picture of the image data subjected to the image processing by the image processing control means; and
operation means for operating the display screen,
wherein the image processing control means performs: a reduction picture generating processing of generating a reduction picture that is obtained by displaying an entirety of the picked-up image in a partial area of the display screen; an enlargement picture generating processing of correcting a distortion due to the photographic lens for one or a plurality of parts of the picked-up image and generating an enlargement picture that is subjected to enlargement to become larger than the reduction picture; and control for displaying the reduction picture and the enlargement picture on the display screen.

2. A camera apparatus according to claim 1, wherein the reduction picture is provided with a display indicating a range corresponding to the enlargement picture.

3. A camera apparatus according to claim 1, wherein, in a case where the reduction picture and the enlargement picture are displayed simultaneously on the display screen, image data on the reduction picture and image data on the enlargement picture are transferred from the image processing control means to the display means at mutually different timings.

4. A camera apparatus according to claim 1, wherein the reduction picture has been subjected to a processing of reducing a data amount of an image.

5. A camera apparatus according to claim 1, wherein:
a plurality of display means and a plurality of operation means are provided to the camera section as the display means and the operation means, respectively; and
the image processing control means is provided on a side of the operation device.

6. A camera apparatus according to claim 5, wherein the image data transferred from a side of the camera section to a side of the display means in order to generate the enlargement picture is set as image data only on a part corresponding to the enlargement picture among the image data on the picked-up image.

7. An image processing apparatus for performing an image processing on a picked-up image of a subject obtained by imaging light therefrom on image-pickup means by a wide-angle photographic lens, wherein the image processing apparatus performs: a reduction picture generating processing of generating a reduction picture that is obtained by displaying an entirety of the picked-up image in a partial area of a display screen; an enlargement picture generating processing of correcting a distortion due to the photographic lens for one or a plurality of parts of the picked-up image and generating an enlargement picture that is subjected to enlargement to become larger than the reduction picture; and control for displaying the reduction picture and the enlargement picture on the display screen.

8. An image processing method of performing an image processing on a picked-up image of a subject obtained by imaging light therefrom on image-pickup means by a wide-angle photographic lens, the image processing method comprising:
a reduction picture generating processing of generating a reduction picture that is obtained by displaying an entirety of the picked-up image in a partial area of a display screen;
an enlargement picture generating processing of correcting a distortion due to the photographic lens for one or a plurality of parts of the picked-up image and generating an enlargement picture that is subjected to enlargement to become larger than the reduction picture; and
a processing of displaying the reduction picture and the enlargement picture on the display screen.
